# EUROPÄISCHE PATENTSCHRIFT

(11) **EP 0 819 240 B1**
(45) Veröffentlichungstag und Bekanntmachung des Hinweises auf die Patenterteilung: **12.07.2000**
(21) Anmeldenummer: 96911962.7
(22) Anmeldetag: 29.03.1996
(51) Int. Cl.: G01F 15/00, B29C 45/78

(54) **DURCHFLUSSMESSVORRICHTUNG**
FLOW MEASURING DEVICE
SYSTEME DE MESURE DE DEBIT

(30) Priorität: 07.04.1995 DE 19513055
(43) Veröffentlichungstag der Anmeldung: 21.01.1998
(73) Patentinhaber: Delcroix, Jean-Louis, 84600 Valréas (FR); Renahy, Xavier, 70000 Vaivre-et-Montoille (FR)
(72) Erfinder: Delcroix, Jean-Louis, 84600 Valréas (FR); Renahy, Xavier, 70000 Vaivre-et-Montoille (FR)
(74) Vertreter: Rehders, Jochen, Dipl.-Ing.
(86) Internationale Anmeldenummer: EP9601379
(87) Internationale Veröffentlichungsnummer: WO9631760

(56) Entgegenhaltungen:
- EP-A- 0 414 898
- WO-A-92/15439
- DE-A- 4 242 024
- GB-A- 2 242 007
- US-A- 4 559 834

## Beschreibung

Die Erfindung betrifft eine Durchflußmeßvorrichtung, für durch Spritzgußformen geführtes Kühlfluid.

Durchflußmeßvorrichtungen sind immer dann erforderlich, wenn die Durchflußmenge eines Fluids durch eine Vorrichtung, z. B. die Durchflußmenge eines Kühlfluids durch eine Spritzgußform gesteuert oder geregelt werden soll.

Im Handel befindliche Durchflußmeßvorrichtungen für durch Spritzgußformen geführtes Kühlfluid sind kompliziert aufgebaut, hinsichtlich ihrer verschiedenen Anschlüsse unpraktisch konstruiert und erfordern getrennte Betätigungen für ein in der Regel vorhandenes Absperrventil, das stromauf vor der Spritzgußform angeordnet ist und für ein Durchflußsteuerventil, das stromab von einem Durchflußmesser, der Teil der Durchflußmeßvorrichtung ist, angeordnet ist.

Der Erfindung liegt daher die Aufgabe zugrunde, eine Durchflußmeßvorrichtung zu schaffen, die einfach und übersichtlich aufgebaut ist, deren Anschlüsse in sinnfälliger Weise und platzsparend gruppiert sind, keine getrennte Betätigung der an der Durchflußmeßvorrichtung vorhandenen Ventile erfordert und bei der sich die Durchflußmenge des Fluids mittels des Durchflußsteuerventils steuern läßt, ohne daß dies durch das Absperrventil beeinflußt wird.

Ausgehend von dieser Aufgabenstellung wird bei einer Durchflußmeßvorrichtung der eingangs erwähnten Art mit einem Kühlfluideingang und einem Kühlfluidausgang zur Spritzgußform vorgeschlagen, daß erfindungsgemäß ein Absperrventil zwischen dem Kühlfluideingang und dem Kühlfluidausgang, ein Durchflußmesser mit einem Eingang für von der Spritzgußform kommendes Kühlfluid und einem Ausgang, ein Durchflußsteuerventil vor dem Ausgang und eine gemeinsame Betätigungsvorrichtung für das Absperrventil und das Durchflußsteuerventil vorgesehen sind, wobei das Absperrventil beim Öffnen der beiden Ventile und beim Einstellen des Durchflusses mittels des Durchflußsteuerventils stets einen so großen Querschnitt freigibt, daß der Druckverlust im Absperrventil gegenüber dem im Durchflußsteuerventil vernachlässigbar ist. Dabei können bevorzugterweise der Kühlfluideingang benachbart zum Ausgang, das Absperrventil benachbart zum Durchflußsteuerventil und die gemeinsame Betätigungsvorrichtung in bzw. an einem Ventilblock angeordnet sein.

Auf diese Weise befinden sich die Anschlüsse für das Kühlfluid sehr nahe beieinander am Ventilblock, so daß sich in sinnfälliger und raumsparender Weise die Verbindung zu einer Kühlfluidzuleitung, einer Kühlfluidrückleitung, einer Verbindungsleitung vom Ventilblock zu einer Spritzgußform und einer Rückleitung von der Spritzgußform auf einfache Weise herstellen lassen.

Demgegenüber zeigt die DE-A-42 42 024 eine Vorrichtung mit wenigstens zwei von einer gemeinsamen Betätigungsvorrichtung wechselweise und ohne Überschneidung betätigten Tellerventilen zum wahlweisen Beaufschlagen von Gußformen mit einer Flüssigkeit oder einem Gas.

In der GB-A-2 242 007 ist des weiteren eine Absperrvorrichtung mit zwei Absperrventilen und einer gemeinsamen Betätigungsvorrichtung beschrieben, wobei die Absperrventile gleichzeitig und gleichsinnig geöffnet und geschlossen werden, um beispielsweise einen Durchflußzähler montieren und demontieren zu können, wenn beide Absperrventile geschlossen sind.

Besonders vorteilhaft ist es, wenn der Kühlfluideingang und der dazu benachbarte Ausgang als parallele Durchgangsbohrungen von einer Seitenfläche zur parallelen anderen Seitenfläche verlaufend im Ventilblock angeordnet sind, da sich dann mehrere Ventilblöcke mit fluchtenden und abgedichteten Bohrungen, mit ihren Seitenflächen aneinander anliegend verschrauben lassen.

Von jeder dieser Bohrungen können jeweils parallele Bohrungen senkrecht abzweigen, von denen eine zum Kühlfluideingang führt und die andere die Verbindung zum Durchflußmesser herstellt und das Absperrventil bzw. das Durchflußsteuerventil aufnehmen, die vorzugsweise koaxial auf einer zu den Bohrungen senkrechten Achse angeordnet sind.

Der Durchflußmesser kann vorzugsweise als Schwebekörperdurchflußmesser mit einem konischen, wenigstens bereichsweise in Längsrichtung durchsichtigen, graduierten, senkrechten Rohr und einem darin angeordneten Schwebekörper bestehen, wobei das obere Ende in dem Ventilblock abgedichtet vor dem Durchflußsteuerventil eingesetzt ist, das untere Ende von einem mit dem Ventilblock verbundenen Träger lösbar gehalten wird und der Eingang für das von der Spritzgußform kommende Kühlfluid direkt am unteren Ende des Rohrs angeordnet ist.

Eine besonders einfache und leicht abzudichtende Ausführung des Absperrventils und des Durchflußsteuerventils kann koaxial angeordnete, drehbare Küken aufweisen, wobei zur besseren Steuerung des Fluiddurchflusses durch das Durchflußsteuerventil der Durchflußquerschnitt des Absperrventils größer als der des Durchflußsteuerventils sein kann.

Zusätzlich zu dieser Maßnahme oder anstelle der unterschiedlichen Durchflußquerschnitte kann auch vorgesehen sein, daß sich der Öffnungsquerschnitt des Absperrventils bei Betätigung durch die gemeinsame Betätigungsvorrichtung schneller vergrößert als der des Durchflußsteuerventils.

Die einfachste gemeinsame Betätigungsvorrichtung kann aus einer zu den Küken koaxialen Welle bestehen, mittels der die Küken miteinander gekuppelt sind, wobei diese Küken gleichzeitig durch einen Drehknopf direkt oder unter Zwischenschaltung einer Zahnradübersetzung geöffnet und geschlossen werden können.

Um zu erreichen, daß das Absperrventil stets einen so großen Querschnitt freigibt, daß der Druckverlust im Absperrventil gegenüber dem im Durchflußsteuerventil vernachlässigbar ist, kann auch vorgesehen sein, daß das Absperrventil und das Durchflußsteuerventil so miteinander gekuppelt sind, daß zuerst das Absperrventil und danach das Durchflußsteuerventil geöffnet werden.

Dies läßt sich beispielsweise durch eine Nockenbetätigung für das Absperrventil und für das Durchflußsteuerventil erreichen, die vorzugsweise so ausgebildet sein kann, daß auf der koaxialen Welle zwischen den beiden Küken ein axial verschiebbares, antreibbares Rad angeordnet ist, das auf jeder Seitenfläche eine nockenartige, mit entsprechenden Anschlägen am Ventilblock zusammenwirkende Erhebungen aufweist, die gegeneinander um mindestens 90° so versetzt sind, daß das Rad bei einer Drehung axial in Richtung des Absperrventils oder in Richtung des Durchflußsteuerventils verschoben wird und dann mittels dadurch kuppelbarer Mitnehmer entweder das Küken des Absperrventils oder das Küken des Durchflußsteuerventils in Drehung versetzt.

Die nockenartigen Erhebungen lassen sich auf den Seitenflächen des Rades so anordnen, daß zunächst das Absperrventil mit dem Rad gekuppelt ist, während das Durchflußsteuerventil entkuppelt ist, so daß eine erste Drehung des Rades, beispielsweise um 90°, das vollständige Öffnen des Kükens des Absperrventils bewirkt, wonach das Rad von dem Absperrventil entkuppelt und mit dem Durchflußsteuerventil gekuppelt wird und somit eine weitere Drehung des Rades das feinfühlig steuerbare Öffnen des Durchflußsteuerventils bewirkt.

Im einzelnen können die Mitnehmer aus auf der mit den Küken verbundenen Welle beiderseits des Bodens drehfest angeordneten Mitnehmerscheiben mit jeweils einer achsparallelen Bohrung auf jeder Seite des Rades und achsparallelen, durch die Axialverschiebung des Rades mit der einen Bohrung oder der anderen Bohrung in und außer Eingriff bringbaren Mitnehmerstiften bestehen.

Wenn diese Mitnehmerstifte federnd in einer achsparallelen Bohrung im Rad gelagert sind, läßt sich das Rad durch die nockenartigen Erhebungen axial verschieben, ohne daß ein Zwängen zwischen den Mitnehmerscheiben eintreten kann.

Um das Rad auf einfache Weise antreiben zu können, kann es als Zahnrad ausgebildet sein und durch ein Ritzel auf einer achsparallelen Welle mit einem Betätigungsknopf in Drehung versetzt werden. Die Breite des Zahnrades muß dann die Breite des Ritzels etwa um den axialen Verschiebeweg nach beiden Seiten übersteigen.

Zur besonders feinfühligen Steuerung der Durchflußmenge durch das Durchflußsteuerventil kann wenigstens die Öffnung im Küken des Durchflußsteuerventils oder die Durchlaßöffnung im Ventilgehäuse einen elliptischen Querschnitt mit in Richtung der Drehachse verlaufender kleiner Achse und senkrecht dazu verlaufender großer Achse aufweisen.

Die Erfindung wird nachstehend anhand mehrerer in der Zeichnung dargestellter Ausführungsbeispiele des näheren erläutert. In der Zeichnung zeigen:

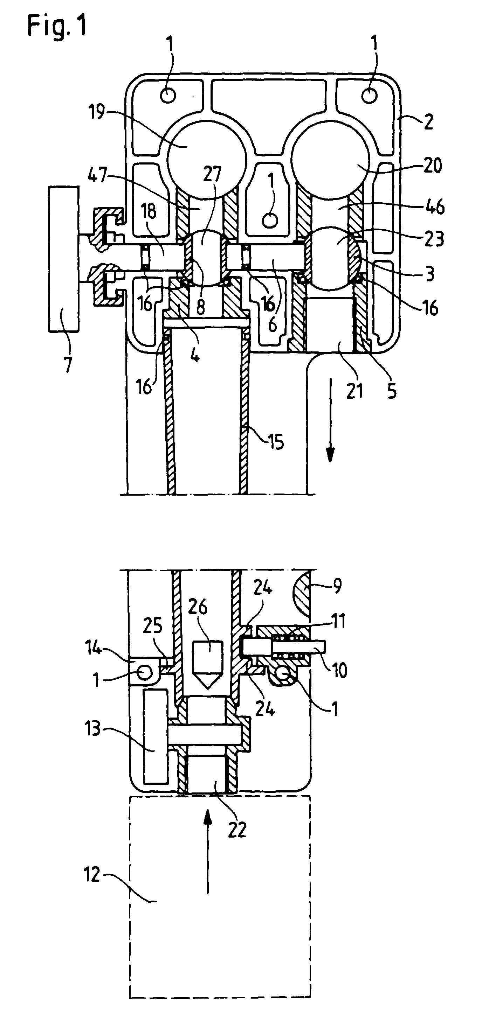

- Fig. 1: eine Schnittansicht der Durchflußmeßvorrichtung gemäß einer ersten Ausführungsform,
- Fig. 2: eine Schnittansicht des Ventilblocks gemäß einer zweiten Ausführungsform,
- Fig. 3: eine Detaildarstellung des Öffnungsquerschnitts des Durchflußsteuerventils gemäß Fig. 2 und
- Fig. 4: eine Schnittansicht des Ventilblocks gemäß einer dritten Ausführungsform.

Die erfindungsgemäße Durchflußmeßvorrichtung weist einen Ventilblock 2 auf, der mit Bohrungen 1 versehen ist, um mehrere Ventilblöcke 2 miteinander zu verschrauben, oder um nicht dargestellte Deckplatten und/oder ein Trägerblech 9 mit Seitenflächen des Ventilblocks 2 zu verschrauben.

Der Ventilblock 2 weist eine von einer Seitenfläche zur anderen Seitenfläche verlaufende Durchgangsbohrung 19 auf, die einen Kühlfluidausgang bildet. Parallel dazu ist eine weitere Durchgangsbohrung 20 angeordnet, die einen Kühlfluideingang bildet. Von den Bohrungen 19, 20 zweigen senkrechte Bohrungen 46, 47 ab, die ebenfalls parallel zueinander verlaufen und die Aufnahme für ein Kugelküken 3 eines Absperrventils und für ein Kugelküken 8 eines Durchflußsteuerventils bilden.

Die Kugelküken 3, 8 werden in den Bohrungen 46, 47 mittels Muffen 4, 5 gehalten und mittels O-Ringen 16 abgedichtet.

Die Drehachse der Küken 3, 8 verläuft senkrecht zu den Achsen 46, 47. Koaxial zu dieser Drehachse ist eine Welle angeordnet, die mittels in Fig. 3 dargestellter Nasen 30 in entsprechende Schlitze in den Kugelküken 3, 8 eingreift und auf diese Weise eine drehfeste Kupplung zwischen den Kugelküken 3, 8 herstellt. Die Welle 6 ist in ihrer Bohrung ebenfalls durch einen O-Ring 16 abgedichtet.

Eine weitere zur Drehachse der Kugelküken 3, 8 koaxiale Welle 18 greift mit ihrer Nase in einen Schlitz im Kugelküken 8 ein und ist aus der Vorderseite des Ventilblocks 2 herausgeführt, wo sie in einem Drehknopf 7 endet. Auf der Welle 18 ist eine 0-Ringdichtung 16 angeordnet.

Eine Sicherung gegen axiales Verschieben der Welle 18 wird durch Rastnasen am Drehknopf 7, die entsprechende Vorsprünge am Ventilblock 2 hintergreifen, gewährleistet.

Bei dieser Ausführungsform wird das Kugelküken des Durchflußsteuerventils direkt mittels des Drehknopfes 7 über die Welle 18 betätigt und nimmt dabei gleichzeitig das Kugelküken 3 des Absperrventils über die Welle 6 mit.

Da der Querschnitt der Öffnung 23 im Kugelküken 3 des Absperrventils größer ist als der Querschnitt der Öffnung 27 im Kugelküken des Durchflußsteuerventils ist der Durchflußquerschnitt des Absperrventils in jeder Stellung so viel größer als der Durchflußquerschnitt des Durchflußsteuerventils, so daß es möglich ist, die Durchflußmenge des Fluids mittels des Durchflußsteuerventils zu steuern, ohne daß dies durch den Druckverlust im Absperrventil beeinflußt wird.

Das Trägerblech 9 dient als Halterung für den Durchflußmesser in Form eines konischen, durchsichtigen Rohres 15, dessen oberes Ende in eine Bohrung vor der Muffe 4 in den Ventilblock 2 mittels eines O-Rings 16 abgedichtet eingesetzt ist. Am unteren Ende weist das Rohr 15 Rastvorsprünge 24 auf, in die ein durch eine Feder 11 verschiebbarer Raststift 10 eingreift, der am Trägerblech 9 gelagert ist.

Am Trägerblech 9 sind Augen 14 angeordnet, deren Höhe der Breite des Ventilblocks 2 entspricht und die mit Bohrungen 1 versehen sind, mittels derer sich, wie bereits bezüglich des Ventilblocks 2 erwähnt, mehrere Durchflußmeßvorrichtungen nebeneinander anordnen und verbinden lassen. Zwischen den Augen 14 ist das Rohr 15 mittels eines Flansches 25 zentriert.

Am freien unteren Ende des Rohres 15 sind ein Thermometer 13 sowie ein als Schraubnippel 22 ausgebildeter Kühlfluideingang für von einer nicht dargestellten Spritzgußform kommendes Kühlfluid angeordnet.

Statt die von einer Spritzgußform kommende Kühlfluidleitung direkt am Schraubnippel 22 anzuschließen, kann auch ein gestrichelt dargestellter elektronischer Durchflußregler 12 zwischengeschaltet sein.

Das von einer nicht dargestellten Kühlfluidquelle kommende Kühlfluid ist am Kühlfluideingang 20 angeschlossen, durchströmt die Bohrung 46, die Öffnung 23 im Kugelküken 3 und gelangt von dort über einen Kühlfluidausgang 21 zu einer nicht dargestellten Spritzgußform. Von dort fließt das erwärmte Kühlfluid durch den Eingang 22 in das Rohr 15. Dieses Rohr 15 ist konisch ausgebildet und enthält einen Schwebekörper 26, der entsprechend der Durchflußmenge und der sich daraus ergebenden Durchflußgeschwindigkeit durch das Kühlfluid angehoben wird und in einer zur Durchflußmenge proportionalen Höhe im Rohr 15 verharrt. Das Rohr 15 läßt sich mit einer Skala versehen, die sich auf die Durchflußmenge des Kühlfluids eichen läßt.

Um ein besonders feinfühliges Einstellen der Durchflußmenge zu erreichen, kann ein Kugelküken 28 für das Durchflußsteuerventil vorgesehen sein, dessen Öffnung 29 einen elliptischen Querschnitt aufweist, wobei die kleine Achse in Richtung der Drehachse des Kugelkükens 28 und die große Achse senkrecht dazu verlaufen.

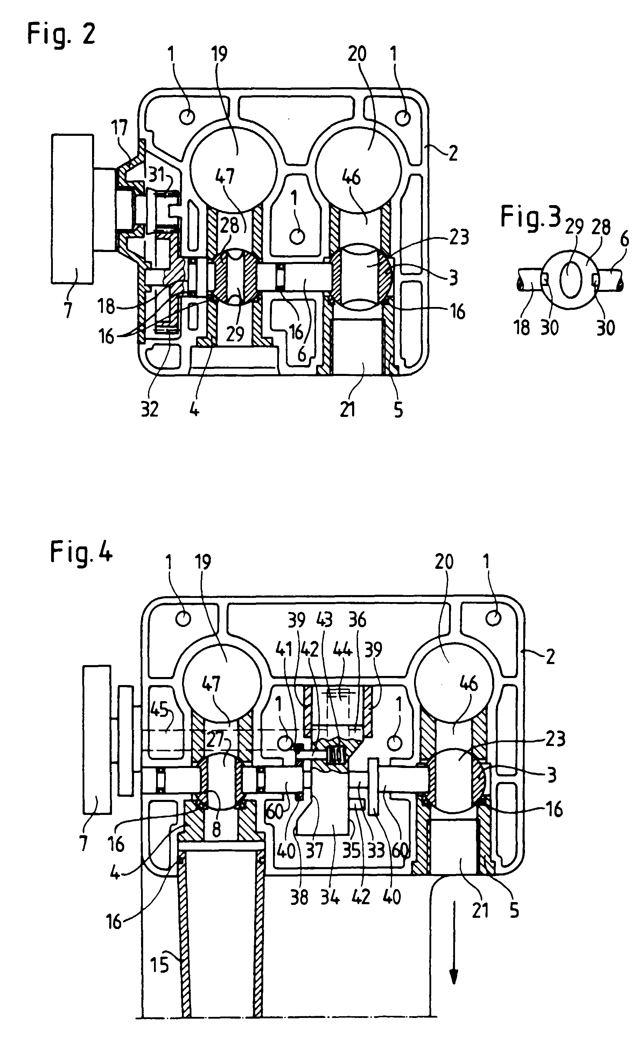

Gemäß der in Fig. 2 dargestellten Ausführungsform ist auf einer mit dem Kugelküken 28 gekuppelten koaxialen Welle 18 ein Zahnrad 32 angeordnet, das mit einem Ritzel 31 kämmt. Dieses Ritzel wird durch den Drehknopf 7 in Drehung versetzt. Der Drehknopf 7 mit dem Ritzel 31 ist in einem am Ventilblock 2 angeschraubten oder angeklebten Deckel 17 angeordnet.

Durch die Zahnradübersetzung 31, 32 entspricht eine Drehung des Drehknopfs 7 um etwa 300° einer Drehung der Kugelküken 3, 28 von etwa 90°. Dies in Verbindung mit der Öffnung 29 mit elliptischen Querschnitt im Kugelküken 28 ergibt eine sehr feinfühlige Einstellmöglichkeit des Durchflußsteuerventils.

Die Ausführungsform gemäß Fig. 4 ist so gestaltet, daß bei einer Drehung des Drehknopfes 7 zunächst das Kugelküken 3 des Absperrventils geöffnet wird und erst danach das Kugelküken 8 des Durchflußsteuerventils betätigt wird. Dies wird durch eine Nockenbetätigung erreicht, die zwischen das Kugelküken 3 und das Kugelküken 8 antreibenden Wellenstümpfen 60 angeordnet ist. Die Wellenstümpfe 60 werden mittels einer koaxialen Welle 33 kleineren Durchmessers auf Abstand gehalten, ohne durch diese Welle 33 jedoch drehend gekuppelt zu sein.

Auf der Welle 33 ist ein axial verschiebbares Zahnrad 34 angeordnet, an dessen einer Seitenfläche 35 eine nockenartige Erhebung 36 und an der anderen Seitenflächen 37 eine nockenartige Erhebung 38 angeordnet sind.

Im Ventilblock 2 sind gehäusefeste, beabstandete Anschläge 39 angeordnet, deren Abstand der Breite des Zahnrades 34 zuzüglich der Höhe der nockenartigen Erhebungen 36, 38 entspricht.

An jedem Wellenstumpf 60 ist eine Mitnehmerscheibe 40 drehfest angeordnet, die jeweils eine achsparallele Bohrung 41 aufweisen. Im Zahnrad 34 sind achsparallele Mitnehmerstifte 42 angeordnet, die aus den Seitenflächen 35, 37 herausragen und sich mit den Bohrungen 41 in Eingriff bringen lassen. Die Mitnehmerstifte 42 sind durch eine Druckfeder 43 beaufschlagt.

Mit dem Zahnrad 34 kämmt ein weiteres Zahnrad 44, das auf einer achsparallelen Welle 45 angeordnet ist und sich mittels des Drehknopfes 7 in Drehung versetzen läßt.

Die nockenartigen Erhebungen 36, 38, die Bohrungen 41 in den Mitnehmerscheiben 40 und die Mitnehmerstifte 42 im Zahnrad 34 sind so angeordnet, daß bei einer Drehung des Drehknopfes 7 und damit des Zahnrades 34 zunächst das Zahnrad 34 nach rechts verschoben wird, der entsprechende Mitnehmerstift 42 mit der entsprechenden Bohrung 41 in der Mitnehmerscheibe 40 in Eingriff kommt und das Kugelküken 3 in die in Fig. 4 dargestellte Öffnungsstellung dreht. Ist diese Öffnungsstellung erreicht, wird das Zahnrad 34 durch die nockenartige Erhebung 36, die sich nunmehr mit dem Zahnrad 34 zwischen den Anschlägen 39 befindet, nach links verschoben, so daß der Mitnehmerstift 41 in der dargestellten Weise in die Bohrung 41 der Mitnehmerscheibe 40 eingreift, während der Mitnehmerstift 42 außer Eingriff mit der Mitnehmerscheibe 40 des Kugelkükens 3 gelangt, so daß sich nunmehr das Kugelküken 8 öffnen und in die in Fig. 4 sichtbare Stellung bringen läßt, ohne daß sich dabei das Kugelküken 3 des Absperrventils bewegt.

Da bei Verwendung von Kugelküken 3, 8 nur eine Drehung um 90° von der vollständig geschlossenen in die vollständig geöffnete Stellung und umgekehrt erforderlich ist, sind die nockenartigen Erhebungen 36, 38 an den Seitenflächen 35, 37 des Zahnrades 34 so angeordnet, daß das Entkuppeln des Kugelkükens 3 und das Einkuppeln des Kugelkükens 8 nach einer Drehung um 90° erfolgen. Das Kugelküken 8 ist dann nach einer weiteren Drehung um 90° vollständig geöffnet, so daß sich während dieses zweiten Teils der Drehung ein feinfühliges Einstellen des Durchflußmenge mittels des Kugelkükens 8, das ggf. eine Öffnung mit einem elliptischen Querschnitt, wie in Fig. 3 dargestellt ist, aufweist, erreichen läßt. Auch der Durchmesserunterschied zwischen der Öffnung 23 im Kugelküken 3 und der Öffnung 27 im Kugelküken 8 trägt dazu bei, daß keine Beeinflussung der Steuerung der Durchflußmenge vom Absperrventil mit dem Kugelküken 3 her eintreten kann.

Die Erfindung ist nicht auf ein Absperrventil und ein Durchflußsteuerventil mit Kugelküken beschränkt, vielmehr lassen sich andere Ventile mit drehbaren Küken oder auch nockenbetätigte Klappenventile einsetzen, bei denen der Nocken für das Absperrventil so gestaltet ist, daß ein schnelles Öffnen und Schließen erfolgt, während der Nocken für das Durchflußsteuerventil eine langsam ansteigende Rampe aufweisen kann, die ein allmähliches Öffnen zum Steuern des Durchflusses durch das Durchflußsteuerventil bewirkt.

Die erfindungsgemäße Durchflußmeßvorrichtung läßt sich besonders vorteilhaft in Verbindung mit der Vorrichtung zum wahlweisen Beaufschlagen von Formen für die Kunststoffbearbeitung mit einer Flüssigkeit oder einem unter Druck stehendem Gas gemäß dem deutschen Patent 42 42 024 verwenden.

## Patentansprüche

1. Durchflußmeßvorrichtung, für durch Spritzgußformen geführtes Kühlfluid mit
- einem Kühlfluideingang (20)
- einem Kühlfluidausgang (21) zur Spritzgußform,
- einem Absperrventil (3) zwischen dem Kühlfluideingang (20) und dem Kühlfluidausgang,
- einem Durchflußmesser (15, 26) mit einem Eingang (22) für von der Spritzgußform kommendes Kühlfluid und einem Ausgang (19),
- einem Durchflußsteuerventil (8, 28) vor dem Ausgang (19) und
- einer gemeinsamen Betätigungsvorrichtung (6; 7; 31, 32, 34 bis 45, 60) für das Absperrventil (3) und das Durchflußsteuerventil (8, 28), wobei das Absperrventil (3) beim Öffnen der beiden Ventile (3; 8, 28) und beim Einstellen des Durchflusses mittels des Durchflußsteuerventils (8, 28) stets einen so großen Querschnitt freigibt, daß der Druckverlust im Absperrventil (3) gegenüber dem im Durchflußsteuerventil (8, 28) vernachlässigbar ist.

2. Durchflußmeßvorrichtung nach Anspruch 1, **gekennzeichnet durch** einen Ventilblock (2), an bzw. in dem der Kühlfluideingang (20) benachbart zum Ausgang (19), das Absperrventil (3) benachbart zu dem Durchflußsteuerventil (8, 28) und die gemeinsame Betätigungsvorrichtung (6, 7; 31, 32; 34 bis 45, 60) angeordnet sind.

3. Durchflußmeßvorrichtung nach Anspruch 2, **dadurch gekennzeichnet**, daß der Durchflußmesser als Schwebekörperdurchflußmesser mit einem konischen, wenigstens bereichsweise in Längsrichtung durchsichtigen, graduierten, senkrechten Rohr (15) und einem darin angeordneten Schwebekörper (26) ausgebildet ist, wobei das obere Ende in dem Ventilblock (2) abgedichtet vor dem Durchflußsteuerventil (8, 28) eingesetzt ist, das untere Ende von einem mit dem Ventilblock (2) verbundenen Träger (9) lösbar gehalten wird und der Eingang (22) für das von der Spritzgußform kommende Kühlfluid direkt am unteren Ende des Rohrs (9) angeordnet ist.

4. Durchflußmeßvorrichtung nach 2 oder 3, **dadurch gekennzeichnet**, daß das Absperrventil und das Durchflußsteuerventil koaxial angeordnete, drehbare Küken (3, 8, 28) aufweisen.

5. Durchflußmeßvorrichtung nach Anspruch 4, **dadurch gekennzeichnet**, daß der Durchflußquerschnitt des Absperrventils (3) größer als der des Durchflußsteuerventils (8, 28) ist.

6. Durchflußmeßvorrichtung nach einem oder mehreren der Ansprüche 1 bis 5, **dadurch gekennzeichnet**, daß sich der Öffnungsquerschnitt des Absperrventils (3) bei Betätigung schneller vergrößert als der des Durchflußsteuerventils (8, 28).

7. Durchflußmeßvorrichtung nach Anspruch 6, **dadurch gekennzeichnet**, daß die Küken (3, 8, 28) mittels einer koaxialen Welle (6) miteinander gekuppelt sind und gleichzeitig durch einen Drehknopf (7) direkt oder unter Zwischenschaltung einer Zahnradübersetzung (31, 32) geöffnet und geschlossen werden.

8. Durchflußmeßvorrichtung nach einem oder mehreren der Ansprüche 1 bis 6, **dadurch gekennzeichnet**, daß das Absperrventil (3) und das Durchflußsteuerventil (8, 28) so miteinander gekuppelt sind, daß zuerst das Absperrventil (3) und danach das Durchflußsteuerventil (8, 28) geöffnet werden.

9. Durchflußmeßvorrichtung nach Anspruch 8, **gekennzeichnet durch** eine Nockenbetätigung (36, 38) für das Absperrventil (3) und für das Durchflußsteuerventil (8, 28).

10. Durchflußmeßvorrichtung nach Anspruch 7 und 8, **dadurch gekennzeichnet**, daß auf der koaxialen Welle (33) zwischen den beiden Küken (3, 8) ein axial verschiebbares, antreibbares Rad (34) angeordnet ist, auf jeder Seitenfläche (35, 37) des Rades (34) je eine nockenartige, mit entsprechenden Anschlägen (39) am Ventilblock (2) zusammenwirkende Erhebung (36, 38) angeordnet ist, die gegeneinander um mindestens 90° so versetzt sind, daß das Rad (34) bei einer Drehung axial in Richtung des Absperrventils oder in Richtung des Durchflußsteuerventils verschoben wird und dann mittels dadurch kuppelbare Mitnehmer (40, 41, 42) entweder das Küken (3) des Absperrventils oder das Küken (8) des Durchflußsteuerventils in Drehung versetzen.

11. Durchflußmeßvorrichtung nach Anspruch 10, **dadurch gekennzeichnet**, daß auf der Welle (6) beiderseits des Rades (34) eine Mitnehmerscheibe (40) mit einer achsparallelen Bohrung (41) und auf jeder Seite (35, 37) des Rades (34) ein achsparallele, durch die Axialverschiebung des Rades (34) mit den Bohrungen (41) in und außer Eingriff bringbare Mitnehmerstifte (42) angeordnet sind.

12. Durchflußmeßvorrichtung, **dadurch gekennzeichnet**, daß die Mitnehmerstifte (42) federnd in einer achsparallelen Bohrung (41) im Rad (34) gelagert sind.

13. Durchflußmeßvorrichtung nach den Ansprüchen 10 bis 12, **dadurch gekennzeichnet**, daß das Rad (34) als Zahnrad ausgebildet ist und durch ein Ritzel (44) auf einer achsparallelen Welle (45) mit einem Betätigungsknopf (7) in Drehung versetzt wird.

14. Durchflußmeßvorrichtung nach einem oder mehreren der Ansprüche 9 bis 13, **dadurch gekennzeichnet**, daß wenigstens die Öffnung (29) im Küken (28) des Durchflußsteuerventils oder die Durchlaßöffnung im Ventilgehäuse einen elliptischen Querschnitt mit in Richtung der Drehachse verlaufender kleiner Achse und senkrecht dazu verlaufender großer Achse aufweist.

15. Durchflußmeßvorrichtung nach einem oder mehreren der Ansprüche 1 bis 14, **dadurch gekennzeichnet**, daß der Kühlfluideingang (20) und der dazu benachbarte Ausgang (19) als parallele Durchgangsbohrungen von einer Seitenfläche zur parallelen anderen Seitenfläche verlaufend im Ventilblock (2) angeordnet sind und sich mehrere Ventilblöcke (2) mit fluchtenden und abgedichteten Bohrungen (19, 20) mit ihren Seitenflächen aneinander anliegend verschrauben lassen und daß Bohrungen (46, 47) senkrecht von den Bohrungen (19, 20) abzweigend und parallel zueinander im Ventilblock (2) vorgesehen sind, von denen die eine Bohrung (46) zum Kühlfluidausgang (21) führt und die andere Bohrung (47) die Verbindung zum Durchflußmesser (15, 26) herstellt und in diesen Bohrungen (46, 47) das Absperrventil (3) bzw. das Durchflußsteuerventil (8, 28) angeordnet sind.

16. Durchflußmesser nach Anspruch 15, **dadurch gekennzeichnet**, daß das Absperrventil (3) und das Durchflußsteuerventil (8, 28) koaxial auf einer zu den Bohrungen (46, 47) senkrechten Achse angeordnet sind.

## Claims

1. A flow measuring device for coolant passing through injection moulds with
- a coolant inlet (20)
- a coolant outlet (21) to the injection mould,
- a cut-off valve (3) between the coolant inlet (20) and the coolant outlet,
- a flow meter (15, 26) with an inlet (22) for coolant coming from the injection mould and an outlet (19),
- a flow control valve (8, 28) upstream of the outlet (19) and
- a common activation device (6; 7; 31; 32; 34 to 45; 60) for the cut-off valve (3), and the flow control valve (8, 28) in which, when the two valves (3; 8, 28) are opened and the flow is adjusted by the flow control valve (8, 28), the cut-off valve (3) constantly releases a sectional area of flow sufficient to ensure that the loss of pressure in the cut-off valve (3) is negligible compared with that in the flow control valve (8, 28).

2. A flow measuring device as claimed in Claim 1, characterized by a valve block (2) on or in which the coolant inlet (20) adjacent to the outlet (19), the cut-off valve (3) adjacent to the flow-control valve (8, 28) and the common activation device (6; 7; 31; 32; 34 to 45; 60) are arranged.

3. A flow measuring device as claimed in Claim 2, characterized in that the flow meter is designed as a suspended-particle flow meter with a conical vertical pipe (15), transparent in the vertical orientation at least in certain areas and graduated, and a suspended particle (26) contained therein, the upper end being inserted, sealed off, in the valve block (2) in front of the flow-control valve (8, 28), the lower end being removably retained by a carrier (9) connected to the valve block (2) and the inlet (22) for the coolant coming from the injection mould being located directly on the lower end of the pipe (9).

4. A flow measuring device as claimed in Claim 2 or 3, characterized in that the cut-off valve and the flow-control valve have co-axially arranged rotatable plugs (3, 8, 28).

5. A flow measuring device as claimed in Claim 4, characterized in that the sectional area of flow of the cut-off valve (3) is greater than that of the flow-control valve (8, 28).

6. A flow measuring device as claimed in one or more of Claims 1 to 5, characterized in that the cross-section opening of the cut-off valve (3) expands more quickly on activation than that of the flow-control valve (8, 28).

7. A flow measuring device as claimed in Claim 6, characterized in that the plugs (3; 8, 28) are coupled by a coaxial shaft (6) and arc simultaneously opened and closed by a rotating head (7), either directly or via an inserted toothed wheel gear (31, 32).

8. A flow measuring device as claimed in one or more of Claims 1 to 6, characterized in that the cut-off valve (3) and the flow-control valve (8, 28) are coupled in such a way that the cut-off valve (3) is opened first and then the flow-control valve (8, 28).

9. A flow measuring device as claimed in Claim 8, characterized by cam-controlled operation (36, 38) of the cut-off valve (3) and the flow-control valve (8, 28).

10. A flow measuring device as claimed in Ciaims 7 and 8, characterized in that on the coaxial shaft (33) between the two plugs (3, 8) an axially displaceable, driveable wheel (34) is located, that on each lateral surface (35, 37) of the wheel (34) one cam-type protrusion (36, 38) is located, co-operating with corresponding abutments (39) on the valve block (2), these being set at an angle of at least 90° to one another in such a way that the wheel (34), when turned, is axially displaced in the direction of the cut-off valve or in the direction of the flow-control valve and which then, via catches (40, 41, 42) which can be engaged by this means, displace into rotation either the plug (3) of the cut-off valve or the plug (8) of the flow-control valve.

11. A flow measuring device as claimed in Claim 10, characterized in that there is a carrier plate (40) located on the shaft (6) on both sides of the wheel (34) with a boring (41) parallel to the axis and there are carrier-rods (42) on each side (35, 37) of the wheel (34) parallel to the axis which engage in and disengage from the borings (41) upon axial displacement of the wheel (34).

12. A flow measuring device, characterized in that the carrier-rods (42) are borne on springs in a boring (41) in the wheel (34) parallel to the axis.

13. A flow measuring device as claimed in Claims 10 to 12, characterized in that the wheel (34) is designed as a toothed wheel and is set in rotation by a pinion (44) on a shaft (45) parallel to the axis with an operating knob (7).

14. A flow measuring device as claimed in one or more of Claims 9 to 13, characterized in that at least the opening (29) in the plug (28) of the flow-control valve or the opening in the valve housing has an elliptical cross-section with a smaller axis in the orientation of the rotation axis and a larger axis running perpendicular to it.

15. A flow measuring device as claimed in one or more of Claims 1 to 14, characterized in that the coolant inlet (20) and the adjacent outlet (19) are arranged as parallel bored apertures running from one lateral surface to the other, parallel, lateral surface within the valve block (2), and that several valve blocks (2) with aligned and sealed-off borings (19, 20) may be attached by screwing to one another by their lateral surfaces and that borings (46, 47) arc provided in the valve block (2), branching off perpendicularly from the borings (19,20) and parallel to one another, of which one boring (46) leads to the coolant outlet (21) and the other boring (47) provides the connection to the flow meter (15, 26) and that the cut-off valve (3) or flow-control valve (8, 28) are arranged in these borings (46, 47).

16. A flow measuring device as claimed in Claim 15, characterized in that the cut-off valve (3) and the flow-control valve (8, 28) arc arranged co-axially on an axis perpendicular to the borings (46, 47).

## Revendications

1. Dispositif de mesure de débit pour un fluide de refroidissement guidé à travers des moules d'injection, comportant
- en entrée de fluide de refroidissement (20),
- une sortie de fluide de refroidissement (21) vers le moule d'injection,
- une vanne d'arrêt (3) entre l'entrée de fluide de refroidissement (20) et la sortie du fluide de refroidissement,
- un débitmètre (15, 26) avec une entrée (22) pour le fluide de refroidissement provenant du moule d'injection et une sortie (19),
- une vanne de commande de débit (8, 28) devant la sortie (19) et
- un dispositif d'actionnement (6, 7 ; 31, 32 ; 34 à 45, 60) commun pour la vanne d'arrêt (3) et la vanne de commande de débit (8, 28), la vanne d'arrêt (3) dégageant toujours une section, à l'ouverture des deux vannes (3 ; 8, 28) et au réglage du débit au moyen de la vanne de commande de débit 8, 28), suffisamment grande pour que la perte de pression dans la vanne d'arrêt (3) soit négligeable par rapport à celle de la vanne de commande de débit (8, 28).

2. Dispositif de mesure de débit selon la revendication 1, caractérisé par un bloc de vannes (2) respectivement sur et dans lequel sont disposés l'entrée de fluide de refroidissement (20) à proximité de la sortie (19), la vanne d'arrêt (3) à proximité de la vanne de commande de débit (8, 28) et le dispositif d'actionnement (6, 7 ; 31, 32 ; 34 à 45, 60) commun.

3. Dispositif de mesure de débit selon la revendication 2, caractérisé en ce que le débitmètre est réalisé sous la forme d'un débitmètre à corps flottant avec un tube (15) vertical, conique, gradué, transparent au moins par endroits dans la direction longitudinale ainsi qu'avec un corps flottant (26) disposé à l'intérieur du tube, l'extrémité supérieure étant insérée, de manière étanche, dans le bloc de vannes (2), devant la vanne de commande de débit (8, 28), l'extrémité inférieure étant maintenue de manière séparable avec un support (9) relié au bloc de vannes (2) et l'entrée (22) pour le fluide de refroidissement provenant du moule d'injection, étant disposée directement à l'extrémité inférieure du tube (9).

4. Dispositif de mesure de débit selon la revendication 2 ou 3, caractérisé en ce que la vanne d'arrêt et la vanne de commande de débit présentent des boisseaux tournants (3, 8, 28).

5. Dispositif de mesure de débit selon la revendication 4, caractérisé en ce que la section de passage de la vanne d'arrêt (3) est supérieure à celle de la vanne de commande de débit (8, 28).

6. Dispositif de mesure de débit selon une ou plusieurs des revendications 1 à 5, caractérisé en ce que la section d'ouverture de la vanne d'arrêt (3) augmente plus rapidement lors de l'actionnement que celle de la vanne de commande de débit (8, 28).

7. Dispositif de mesure de débit selon la revendication 6, caractérisé en ce que les boisseaux (3, 8, 28) sont accouplés entre eux au moyen d'un arbre coaxial (6) et sont fermés et ouverts simultanément par un bouton tournant (7), directement ou par montage intermédiaire d'une transmission à roue dentée (31,32).

8. Dispositif de mesure de débit selon une ou plusieurs des revendications 1 à 6, caractérisé en ce que la vanne d'arrêt (3) et la vanne de commande de débit (8, 28) sont accouplées entre elles de manière que la vanne d'arrêt (3) soit d'abord ouverte, puis la vanne de commande de débit (8, 28).

9. Dispositif de mesure de débit selon la revendication 8, caractérisé par un actionnement à came (36, 38) pour la vanne d'arrêt (3) et pour la vanne de commande de débit (8, 28).

10. Dispositif de mesure de débit selon les revendications 7 et 8, caractérisé en ce que sur l'arbre coaxial (33), entre les deux boisseaux (3, 8), est disposée une roue (34) qui peut être entraînée et qui peut coulisser axialement, sur chaque face latérale (35, 37) de la roue (34) est disposé un relief (36, 38) du type came, coopérant avec des butées (39) correspondantes sur le bloc de vannes (2), qui sont décalées l'une par rapport à l'autre d'au moins 90°, de manière que lors d'une rotation la roue (34) soit déplacée axialement dans la direction de la vanne d'arrêt ou dans la direction de la vanne de commande de débit, et qu'ensuite, au moyen d'entraîneurs (40, 41, 42) pouvant ainsi être accouplés, elles mettent en rotation le boisseau (3) de la vanne d'arrêt ou le boisseau (8) de la vanne de commande de débit.

11. Dispositif de mesure de débit selon la revendication 10, caractérisé en ce que sur l'arbre (6), des deux côtés de la roue (34), est disposé un disque d'entraînement (40) avec un perçage (41) parallèle à l'axe et sur chaque côté (35, 37) de la roue (34) sont disposés des doigt d'entraînement (42) parallèles à l'axe, qui peuvent être amenés, par le coulissement axial de la roue (34), en engagement avec les perçages (41) et désengagés de ceux-ci.

12. Dispositif de mesure de débit caractérisé en ce que les doigts d'entraînement (42) sont montés de manière élastique dans un perçage (41) parallèle à l'axe de la roue (34).

13. Dispositif de mesure de débit selon les revendications 10 à 12, caractérisé en ce que la roue (34) est réalisée sous la forme d'une roue dentée et est mise en rotation par un pignon (44) sur un arbre (45) parallèle à l'axe, au moyen d'un bouton d'actionnement (7).

14. Dispositif de mesure de débit selon une ou plusieurs des revendications 9 à 13, caractérisé en ce qu'au moins l'ouverture (29) dans le boisseau (28) de la vanne de commande de débit ou l'ouverture de passage dans le boîtier de la vanne présente une section elliptique avec le petit axe s'étendant dans la direction de l'axe de rotation et le grand axe perpendiculaire au premier.

15. Dispositif de mesure de débit selon une ou plusieurs des revendications 1 à 14, caractérisé en ce que l'entrée de fluide de refroidissement (20) et la sortie (19) voisine de l'entrée sont disposées dans le bloc de vannes (2) en tant que perçages traversants parallèles qui s'étendent d'une face latérale à l'autre face latérale parallèle, et en ce que plusieurs blocs de vannes (2) avec des perçages (19, 20) alignés et rendus étanches peuvent être vissés appliqués les uns contre les autres par leur face latérale et en ce que des perçages (46, 47) sont prévus dans le bloc de vannes (2), parallèles entre eux et partant perpendiculairement des perçages (19, 20) dont un perçage (46) mène à la sortie de fluide de refroidissement (21) et l'autre perçage (47) réalise la liaison avec le débitmètre (15, 26) et en ce que la vanne d'arrêt (3), ou la vanne de commande de débit (8, 28), est disposée dans ces perçages (46, 47).

16. Dispositif de mesure de débit selon la revendication 15, caractérisé en ce que la vanne d'arrêt (3) et la vanne de commande de débit (8, 28) sont disposées coaxialement sur un axe perpendiculaire aux perçages (46, 47).
